# EUROPÄISCHE PATENTSCHRIFT

(11) **EP 3 347 880 B1**
(45) Veröffentlichungstag und Bekanntmachung des Hinweises auf die Patenterteilung: **01.09.2021**
(21) Anmeldenummer: 16769893.5
(22) Anmeldetag: 08.09.2016
(51) Int. Cl.: G07F 19/00

(54) **VERFAHREN UND VORRICHTUNG ZUR BESTIMMUNG DER INTEGRITÄT EINER KARTENLESEEINRICHTUNG UND EIN DAMIT AUSGESTATTETES SELBSTBEDIENUNGSTERMINAL**
METHOD AND DEVICE FOR DETERMINING THE INTEGRITY OF A CARD READING UNIT AND A SELF-SERVICE TERMINAL EQUIPPED WITH SAME
PROCÉDÉ ET DISPOSITIF DE DÉTERMINATION DE L'INTÉGRITÉ D'UN DISPOSITIF LECTEUR DE CARTE ET TERMINAL DE DISTRIBUTION AUTOMATIQUE EN ÉTANT ÉQUIPÉ

(30) Priorität: 09.09.2015 DE 102015115172
(43) Veröffentlichungstag der Anmeldung: 18.07.2018
(73) Patentinhaber: Wincor Nixdorf International GmbH, 33106 Paderborn (DE)
(72) Erfinder: DIETZ, Oliver, 33178 Borchen (DE); SCHMIDT, Matthias, 33100 Paderborn (DE)
(86) Internationale Anmeldenummer: PCT/EP2016/071190
(87) Internationale Veröffentlichungsnummer: WO 2017/042279

(56) Entgegenhaltungen:
- US-B1- 8 640 947
- Init: "Jahresbericht 2014 Institut für industrielle Informationstechnik", , 7. Mai 2015 (2015-05-07), XP055321391, Gefunden im Internet: URL:https://www.hs-owl.de/init/aktuelles/n ews/news-detail/news/aktueller-jahresberic ht-2014-jetzt-online.html [gefunden am 2016-11-21]
- Anonymous: "inIT: Mit neuen Technologien Geldautomaten vor Dieben schützen", , 26. November 2013 (2013-11-26), XP055319804, Gefunden im Internet: URL:https://www.hs-owl.de/init/en/aktuelle s/veranstaltungen/veranstaltungen-einzelan sicht/news/mit-neuen-technologien-geldauto maten-vor-dieben-schuetzen.html [gefunden am 2016-11-15]

## Beschreibung

Die Erfindung betrifft eine Kartenleseeinrichtung für ein Selbstbedienungsterminal, insbesondere für einen Geldautomaten, gemäß dem Oberbegriff des Anspruchs 1. Des Weiteren betrifft die Erfindung ein damit ausgestattetes Selbstbedienungsterminal sowie ein Verfahren zur Überwachung desselben gemäß dem Oberbegriff der nebengeordneten Ansprüche.

### Gebiet der Erfindung:

Bei Selbstbedienungsterminals, auch kurz SB-Terminals genannt, sind häufig die darin verbauten Kartenleseeinrichtungen ein vorrangiges Ziel für Manipulationsversuche und Skimmingangriffe. Denn zur Bedienung von SB-Terminals, insbesondere von Geldautomaten, benötigt der Nutzer bzw. Kunde eine Bankkarte, die üblicherweise einen Chip sowie einen Magnetstreifen aufweist, auf denen Kartendaten einschließlich der persönlichen Kunden- und Kontozugriffsdaten gespeichert sind. Leider werden an SB-Terminals in zunehmendem Maße Manipulationen durch Dritte vorgenommen, um auf betrügerische Weise an diese Kartendaten zu gelangen. Hierzu wird u.a. versucht, in den Kartenschlitz der Kartenleseeinrichtung möglichst unauffällig eine spezielle Ausspähvorrichtung einzuführen, die geeignet ist, den Magnetstreifen direkt auszulesen oder sich an eine interne / geräteeigene Datenschnittstelle (z.B. USB-Schnittstelle) der Kartenleseeinrichtung anzudocken. Damit sollen letztendlich die Kartendaten ausgelesen werden, um eine illegale Kopie der Bankkarte anfertigen zu können. Des Weiteren sind Skimmingversuche bekannt, bei denen vor dem Kartenschlitz ein fremder Kartenleser als möglichst unauffälliger Überbau angebracht ist, der z.B. per Funk die ausgelesenen Kartendaten an den Betrüger weiterleitet. Wenn es dem Betrüger darüber hinaus gelingt, die zur Bankkarte gehörige Geheimzahl (die sogenannte PIN) auszuspähen, kann er mit der gefälschten Bankkarte und der ausgespähten PIN mühelos an Geldautomaten Geld von dem zugehörigen Konto abheben. Es gibt sogar Skimmingangriffe, welche versuchen, direkt über die interne Schnittstelle einen Kartelesevorgang zu simulieren und die Softwaresteuerung des SB-Terminals bzw. Geldautomaten zu manipulieren.

Darüber hinaus ist das Ergattern der Geldkarte (Card Trapping) ein bekanntes Angriffszenario. Beim card trapping wird ein Vorbau zum Stehlen der Karte vor den Kartenleser montiert. Dieser Vorbau ist zum Kartenleser hin mit einer Schlaufe versehen, direkt hinter dem Kartenschlitz des Vorbaus ist zudem eine Klappe, die nur ein unidirektionales Einführen der Karte ermöglicht. Wenn ein Kunde seine Karte einführt, wird selbige durch die Schlaufe erfasst und gefangen; die Klappe verhindert einen Auswurf der Karte. Dem Gerätenutzer wird durch das Verhalten des Gerätes ein Einzug der Karte vermittelt. Er verlässt das Selbstbedienungsgerät. Folgend entnimmt der Dieb die Karte einschließlich Vorbau.

Um Card Trapping zu detektieren, wird nach dem Stand der Technik der Ablauf beim Karteneinzug verändert. Die Karte wird eingezogen, dann erst noch einmal wieder herausgefahren und erst folgend abschließend wieder vom Kartenleser eingezogen. Ist dieser Ablauf nicht einwandfrei möglich, d.h. das Ausgeben der Karte funktioniert nicht, ist davon auszugehen, dass es sich hierbei um den Versuch des Erlangens der Geldkarte handelt. Diese Sicherheitsroutine erhöht die Transaktionszeit am Gerät.

Auch ist allgemein bekannt, Manipulationsversuchen an SB-Terminals durch den Einsatz von Sensorik entgegenzuwirken. So offenbart die DE 196 05 102 A1, zur Absicherung eines SB-Terminals ein oder mehrere Infrarot-Sensoren einzusetzen, deren Signale von einer Auswertevorrichtung verarbeitet werden, um Überbauten zu erkennen.

In der DE 10 2008 012 231 A1 wird eine Schutzvorrichtung vorgeschlagen, die einen Schutzfeld-Generator und eine damit verbundene Induktivität zum Erzeugen eines elektromagnetischen Schutzfeldes aufweist, welches die beim Kartenlesen erzeugten elektromagnetischen Felder überdeckt und somit die Funktion des fremden Kartenlesers (Ausspähvorrichtung) beeinträchtigt, so dass dieser keine brauchbaren Daten mehr liefern kann. Damit der Betrüger die Schutzvorrichtung nicht bemerkt, wird das elektromagnetische Schutzfeld mit einem speziellen Schutzsignal erzeugt, das ein normales Kartenlese-Signal simuliert, wobei das Signal nur unbrauchbare Pseudo-Daten enthält, die der Betrüger nicht verwerten kann. Jedoch ist die Schutzvorrichtung nicht geeignet, Skimming-Versuche zu verhindern oder zu erschweren, welche direkt im Innern der Kartenleseeinrichtung ansetzen und z.B. Signale von einer dort eingeführten Ausspähvorrichtung empfangen oder sogar von einer internen geräteeigenen Datenschnittstelle abgreifen.

In diesem Zusammenhang kann auch die DE 10 2009 019 708 A1 genannt werden, die vorschlägt, ein Störfeld mittels Permanentmagneten zu erzeugen, welche über Piezoelemente mechanisch bewegt werden, so dass sich ein magnetisches Wechselfeld ausbildet, das den Skimming-Kartenleser beim Auslesen von Karten effektiv stört.

Des Weiteren ist die EP 1 394 728 A1 zu nennen, bei der mittels Einsatz von Ultraschall-Sensoren erkannt wird, ob an dem SB-Terminal Überbauten angebracht sind. Auch diese Lösungen sind nicht geeignet, Skimming-Versuche zu verhindern oder zu erschweren, die direkt im Innern der Kartenleseeinrichtung ansetzen.

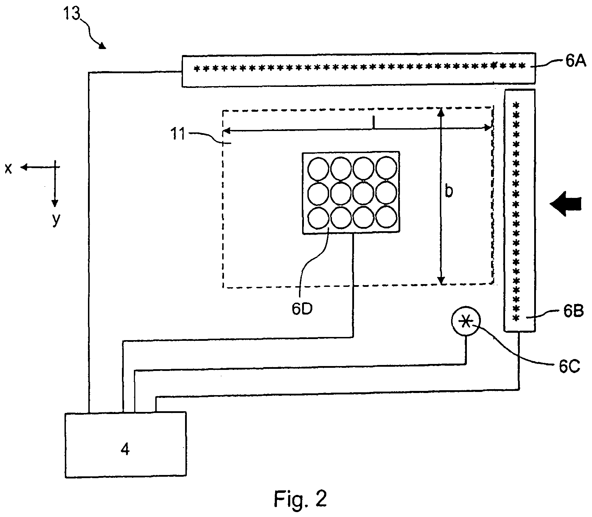

In der US 2006/0249574 A1 wird zwar der Missbrauch von Karten behandelt, nicht aber ein Eingriff in das Innere des Kartenlesers an sich. Vielmehr wird dort vorgeschlagen, die Karte selbst mit einem Mikrokontroller und Verschlüsselungsfunktion zu versehen (s. dort Fig. 2). Zur Stromversorgung des Mikrokontrollers sollen photovoltaische oder piezoelektrische Bauelemente verwendet werden. Eine Überwachung oder Abwehr von Skimming-Versuchen mittels Sensorik wird dort nicht beschrieben.

Die US 8 640 947 B1 offenbart ein System mit eine Oszillator und einem Sensor zur Erfassung von Schwingungsveränderungen im Bereich des Karteneingabeslots bei einem Geldautomaten.

Der Jahresbericht 2014 Institut für industrielle Informationstechnik beschreibt grundsätzliche Möglichkeiten der Erfassung von Veränderung mit Sensoren und Aktoren im Eigenfrequenzbereich.

Des Weiteren ist bei Vorrichtungen, die zur Aufbewahrung von Geldmitteln oder Wertgegenständen dienen, insbesondere bei Tresoren oder Banksafes, bekannt, diese vor Fremdeingriffe durch Einsatz von Sensorik zu schützen. So wird z.B. in der DE 2 318 478 A1 eine Überwachungsanlage für einen Tresorraum offenbart, bei der Ultraschall-Sensoren eingesetzt werden, um anhand des Doppler-Effekts Bewegungen im Tresorraum zu erkennen, die auf einen Einbruch hinweisen. Eine weitere nach demselben Prinzip arbeitende Ultraschall-Alarmanlage wird in der DE 2 617 467 A1 offenbart.

Demnach sind die herkömmlichen Selbstbedienungsterminals mit einer Kartenleseeinrichtung ausgestattet, die einen Aufnahmeraum für eine Karte aufweist, auf der zu lesende Daten gespeichert sind, wobei zur Abwehr von Manipulationsversuchen das Selbstbedienungsterminal an sich mit mindestens einer Sensorik und einer damit verbundenen Auswertevorrichtung ausgestattet sein kann. Diese Lösungen sind jedoch nicht zur effektiven Abwehr von Manipulationsversuchen geeignet, die auf das Innere der Kartenleseeinrichtung abzielen.

Im Folgenden werden die Begriffe Eigenfrequenz und Eingenmode definiert.

Besonders gut in einen Raum bzw. zu einem Gerät/Körpers das einen Raum umschließt passenden Frequenzen werden als Eigenfrequenz bezeichnet. Breitet sich eine als ebene Welle angenommene Eigenfrequenz in einem Raum oder Körper in alle Koordinatenrichtungen aus, entstehen durch die Reflexionen an den Wänden eine Vielzahl von Wellen, die sich an jedem Raumpunkt/Körperpunkt entsprechend ihrer Phasenlage überlagern. Dabei bilden sich Bereiche mit vorwiegend konstruktiven Interferenzen und solche mit vorwiegend destruktiven Interferenzen. Das sich so einstellende Muster wird Eigenmode genannt.

Daher ist es Aufgabe der vorliegenden Erfindung eine Kartenleseeinrichtung der eingangs genannten Art weiterzuentwickeln, so dass auch Manipulationsversuche und SkimmingAngriffe, die auf das Innere und äußere der Kartenleseeinrichtung abzielen, sicher abgewehrt oder zumindest effektiv erschwert werden.

Insbesondere soll das Gehäuse zur Einfassung des Kartenlesers durch eine geeignete Datenverarbeitung und Analyse ein höheres Sicherheitsniveau erhalten. Jeglicher Angriff auf den Kartenleser soll erkannt werden. Das System soll hoch verfügbar und robust sein, da Fehlalarme oftmals zu geringer Aufmerksamkeit oder zu Abschalten der Sicherheitseinrichtung führen.

Es bedarf eines Autorisierungskonzeptes für Technikereinsätze an der Sicherheitseinrichtung. Die Autorisierung kann beispielsweise analog der Autorisierung des Gerätenutzers, also mit Karte und PIN oder aber auch durch Verwendung des CryptaSticks bzw. Autorisierungen über die SOP (software operator Panel) erfolgen.

Auch sollen ein Selbstbedienungsterminal, das mit einer solchen Kartenleseeinrichtung ausgestattet ist, sowie ein Verfahren zur Überwachung eines solchen Selbstbedienungsterminals vorgestellt werden.

### Überblick über die Erfindung:

Gelöst wird die Aufgabe durch eine Kartenleseeinrichtung mit den Merkmalen unabhängiger Ansprüche sowie durch ein Selbstbedienungsterminal und ein Verfahren mit den Merkmalen des entsprechend nebengeordneten Anspruchs.

Im einzelnen handelt es sich um eine Kartenleseeinrichtung für ein Selbstbedienungsterminal, mit einem Gehäuse , in das eine Karte einziehbar ist, um ausgelesen zu werden, mit mechatronischen Wandlern umfassend Sensoren und/oder Aktoren, die mit einer Auswertevorrichtung verbunden sind. Diese Kartenleseeinrichtung umfasst mechatronischeWandler, die so in oder am Gehäuse angeordnet sind, dass die Integrität der Kartenleseeinrichtung, insbesondere des Gehäuses (1), prüfbar ist. Die Auswertevorrichtung ist eingerichtet, um von den mechatronischen Wandlern ein Signal zu empfangen, das von einem Teil der mechatronischen Wandler angeregt ist und von einem Teil der mechatronischen Wandler detektiert wird, um dieses mit Referenzdaten zu vergleichen, und um bei einer definierten Abweichung ein Warnsignal auszugeben, das für eine fehlende Integrität der Kartenleseeinrichtung steht. Die Auswertevorrichtung ist vorteilig im Innern des zu prüfenden Gehäuses angeordnet.

In einer möglichen Ausführungsform verwaltet und speichert die Auswertevorrichtung Referenzdaten für unterschiedliche Zustände der Kartenleseeinrichtung, insbesondere, ob sich eine Karte im Aufnahmeraum befindet oder ob sich keine Karte im Aufnahmeraum befindet. Darüber hinaus werden manipulierte Zustände mithilfe von Referenzdaten erfasst und klassifiziert, d.h. dass manipulierte Zustände qualifiziert bewertet werden können, z.B. kann damit erkannt werden, ob das Gehäuse beschädigt wurde, oder ob eine Skimming Vorrichtung z.B. am Einführschlitz angebracht ist, denn diese baulichen Veränderungen würden das Signal verändern.

In einer weiteren Ausführungsform handelt es sich um eine Kartenleseeinrichtung für ein Selbstbedienungsterminal, die einen Aufnahmeraum für eine Karte aufweist, indem die auf der Karte gespeicherten Daten ausgelesen werden. Hierbei befindet sich im Aufnahmeraum der Kartenleser-Einrichtung ein entsprechender Karten Lesekopf, der die Daten vom Magnetstreifen oder vom Chip der Karte ausliest. Hierbei ist zu beachten, dass Angreifer oftmals ein Element in den Aufnahmeraum einschieben, um ebenfalls diese Daten aus zu lesen. Ferner sind mechatronische Wandler, insbesondere Piezo-elektrische Wandler, umfassend Sensoren und/oder Aktoren, die mit einer Auswertevorrichtung verbunden sind, am Gehäuse oder der mechatronischen Einheit Kartenleser vorhanden. Diese Wandler sollen dazu dienen, aktorisch die Baugruppe anzuregen und sensorisch diese Anregung zu erfassen. Die Anordnung der Wandler erfolgt in einer Art und Weise, dass die Integrität des Bauraumes bzw. Aufnahmeraums respektive des umhüllten Volumens sichergestellt werden kann bzw. eine Veränderung abseits des Normzustands erfasst wird. Ferner soll die Integrität des Gehäuses sichergestellt werden, so dass Manipulation an der Gehäusehülle erfasst werden; diese können umfassen: unerlaubte Anbauten und/oder Öffnungen usw.. Beispielhaft kann hier auf die zuvor genannten Angriffsszenarien Skimming mit einem Aufsatz am Gehäuseschlitz oder der Diebstahl der Karte durch Card Trapping genannt werden. Durch den Aufsatz verändert sich die Masse der Baueinheit und somit auch das Schwingungsverhalten des Körpers, die Eigenmoden bzw. Eigenfrequenzen der Baugruppe verschieben sich. Wird nun ein definiertes Signal durch einen aktorisch betriebenen Wandler eingebracht, verändert sich das Signalbild an den sensorisch betriebenen Wandlern.

Alternativ kann auch geprüft werden, ob sich ein unerlaubter Gegenstand im Aufnahmeraum befinden, der in unerlaubter Weise die Daten von der Karte liest, denn dies führt zu einem anderen Schwingverhalten und einem anderen Signalbild, als dies bei zulässigen Gegenständen der Falle wäre, wie bei zulässigen Karten. Die Auswertevorrichtung verwaltet Referenzdaten von den mechatronischen Wandlern, die einen zulässigen Zustand des Aufnahmeraums repräsentieren, wobei die Auswertevorrichtung eingerichtet ist, um gesteuert durch ein Ereignis von den mechatronischen Wandlern ein hochfrequentes Signal zu empfangen, das von einem Teil der mechatronischen Wandler angeregt wird und von einem Teil der mechatronischen Wandler detektiert wird, um dieses mit den Referenzdaten zu vergleichen, und um bei einer definierten Abweichung ein Warnsignal auszugeben. Diese Referenzdaten können für unterschiedliche Zustände unterschiedlich sein.

Das Warnsignal kann dazu führen, dass entsprechende Funktionalitäten des Selbstbedienungsautomaten deaktiviert werden, oder Nachrichten an eine Zentrale übermittelt werden. Auch ein Aktivieren von additiven Sicherheits- und Prüfungsseinheiten wie z.B. einer Überwachungskamera ist denkbar.

Die Erfindung stellt auch ein Selbstbedienungsterminal, insbesondere einen Geldautomaten mit einer solchen Kartenleseeinrichtung bereit. Außerdem wird hier ein Verfahren vorgestellt, mit dem eine Überwachung des Selbstbedienungsterminals bzw. Geldautomaten mittels der Sensorik und der Auswertevorrichtung durchgeführt wird, wobei die Sensorik in, an oder um die Kartenleseeinrichtung angeordnet ist.

Bevorzugte Ausführungsbeispiele sind den Unteransprüchen zu entnehmen.

Der Auswertungszeitpunkt kann zu nahezu jedem beliebigen Zeitpunkt durchgeführt werden. Einzig der jeweilige Betriebszustand muss eindeutig sein. Im Regelfall wird eine Prüfung in zeitlichen Intervallen am Gerät vorgenommen. Des Weiteren erscheint eine Prüfung bei eingezogener, im Gerät befindlicher Geldkarte, als sinnvoll. Darüber hinaus ist nach Auswurf der Geldkarte eine Prüfung angeraten. Der Zeitpunkt der Auswertung kann abhängig sein vom Zustand des Kartenlesers, insbesondere ob Karten eingezogen wurden und/oder sich im Gerät befinden. Auch ist es denkbar, dass eine permanente Überwachung ohne Unterbrechungen gegeben ist. Der Einschub der Karte wird von additiven Sensoren erfasst. Diese erfassen die Abmessungen der Geldkarte in Länge, Breite und Höhe. Darüber hinaus ist eine Materialbestimmung der Karte möglich. Die Materialbestimmung kann durch diskrete Spektroskopie erfolgen. Es ist denkbar, dass diese Bestimmung von den gleichen additiven Sensoren, welche die Abmessungen der Karte erfassen, übernommen wird. Als Sensor können optische Sensoren im IR-Bereich verwendet werden.

Wird eine Geldkarte eingezogen, so wird die Karte über einen Durchbruch im Gehäuse ausgeworfen. Dieser wird durch eine einfache Lichtschranke überwacht. Jedwedes Verdecken der Lichtschranke wird als Manipulation gewertet. Einzig das Signal des Kartenlesers zum Einzug der Karte, dem sogenannten Retract, autorisiert das Verdecken selbiger.

Die mechatronischen Wandler sind piezo-elektrische Elemente, die als Aktor oder als Sensor fungieren, wobei die Auswertevorrichtung die Funktion als Aktor oder Sensor bestimmt. Es ist hierbei zu beachten, dass ein Aktor auch als Sensor fungieren kann, und abhängig von der Ansteuerung eine der beiden Funktionalitäten implementiert ist.

In einer möglichen Ausführungsform sind mindestens drei piezo-elektrische Elemente am Gehäuse angeordnet sind, wovon jeweils ein piezo-elektrisches Element an den Seiten des Gehäuses angeordnet ist, die als Sensor dienen, und ein piezo-elektrisches Element auf dem Gehäuse, das als Aktor dient. Die beiden Sensoren sind vorzugsweise an zwei gegenüberliegenden Seitenwänden des Gehäuses angeordnet und der Aktor ist auf der Oberseite im 90 Grad Winkel dazu angeordnet. Es sind natürlich auch andere Kombinationen und Anordnungen von Sensor und Aktoren möglich.

Die Positionen der piezo-elektrischen Elemente können mithilfe der Eigenmoden des Gehäuses festgelegt werden. Dazu sind modulare Überlagerungen erstellt worden, anhand derer dann die Positionen ermittelt werden konnten.

Zusätzlich ist denkbar, dass der Betrieb des Kartenlesers oder aber auch einer anderen mechatronischen Einheit des Gerätes einen Signaleintrag erzeugt, der dann von den sensorisch betriebenen Wandlern erfasst wird. In diesem Falle können die aktorisch betriebenen Wandler entfallen.

Letztendlich ist die gewählte Frequenz bzw der gewählte Frequenzbereich abhängig von der Geometrie und der Masse der Baugruppe. Es gilt, signifikante Superpositionen durch das Anregungs- bzw. Absuchsignal, einem sogenannten Sweep, anzufahren. Im Regelfall bildet der Sweep verschiedene Frequenzen ab, die in unterschiedlicher Art und Weise bezüglich des Anregungsverlaufes angefahren werden können. Beispielhaft können sinusförmige Anregungsprofile oder aber auch Rechteckprofile genannt werden. Als vorteilhaft haben sich sinusförmige Anregungsprofile herausgestellt, da die gleichmäßige periodische Anregung deutlichere Auswirkungen auf das System des Gehäuses hat. Dadurch wird die Auswertung eindeutiger und stabiler.

Die Amplitude bestimmt die Höhe des Anregungsmusters und somit die Stärke der Anregung. Dabei gilt es zu beachten, dass das System in einem Geldautomat verbaut wird und somit die Lautstärke von großer Bedeutung ist. Da die Frequenz im hörbaren Bereich liegen kann, sind Umweltbeeinträchtigungen zu berücksichtigen. Wenn das System zu laut ist wird es nicht verwendet, da es den Betrieb der Bank stört. Andersherum sollte es auch nicht zu leise sein, da die Auswertung für eine gute Auswertung ein gutes Signal braucht, welches optimal bei einer großen Amplitude ist. Somit ist die Amplitude je nach Aufstellort und Geräuschbelastung einzustellen.

Die Auswertevorrichtung ist vorzugsweise so ausgebildet, um den Aktor anzuregen, um einen Sweep von 100 Hz bis 5 kHz durchzuführen, der bei 100Hz startet und bei 5kHz endet. In alternativen Ausführungsformen können auch deutliche höhere Frequenzen verwendet werden zB. 20KHz oder mehr je nach Leistung des Piezo-Elements.

In einer weiteren Ausführungsform kann der Sweep für die Analyse in Frequenzbereiche aufgeteilt wird, wobei auf jeden Frequenzbereich unterschiedliche Verfahren zur Mustererkennung anwendbar sind.

Das Anregungssignal als ansteigender Sweep ist vorzugsweise aperiodisch

Eine mögliche Bereichsaufteilung kann wie folgt aussehen.

| Bereich | Frequenzbereich |
|---|---|
| 1 | 650 - 2140 Hz |
| 2 | 2190 - 2550 Hz |
| 3 | 2810 - 3470 Hz |
| 4 | 3470 - 4000 Hz |
| 5 | 4000 - 4300 Hz |
| 6 | 4400 - 4880 Hz |

Diese Bereiche hängen stark vom Gehäuse ab. Innerhalb der Bereiche sollten entsprechend viele Eigenmoden zu finden sein. Daher sind für jeden Gehäusetyp im Vorfeld Kalibrierungen notwendig, um die Bereich sinnvoll zu bestimmen. Andere Aufteilungen sind denkbar und hängen vom Gehäuse ab.

Die piezo-elektrischen Elemente sind an einem Gehäuse oder an Bauteilen der Kartenleseeinrichtung befestigt, wie bereits oben beschrieben wurde.

In einer bevorzugten Ausführungsform ist die Auswertevorrichtung ausgebildet, um eine Mustererkennung auf der Basis der Referenzdaten vorzunehmen.

Um dies zu ermöglichen wird auf die Frequenzbereiche eine Merkmalsextraktion anwendet, um dann auf den extrahierten Merkmalen Klassifikatoren anzuwenden, die anhand der Referenzdaten, Abweichungen erkennen.

Als vorteilhaft haben sich für die Merkmalsextraktion stochastische Mittel erwiesen, da sie zu vielen Merkmalen führen. Ein weiterer Vorteil liegt darin, dass durch die stochastischen Mittel viele Datenpunkte gut zusammengefasst werden können.

Zu den stochastischen Mittel gehören vorzugsweise arithmetische Mittel, Interquatilabstand, Median, Perzentile, Quantile, Standardabweichung, Schiefe, Varianz, Varianzkoeffizient und Wölbung (Kurtosis), usw. Über diese Werte lässt sich eine Messung einfach identifizieren, zudem kann man diese Merkmale auf effiziente Weise extrahieren, da nicht alle Werte in den Arbeitsspeicher geladen werden müssen. Weitere Varianz kann hereingebracht werden, indem man die Werte gewichtet. Die Ausschläge der Sensoren werden mit den dazugehörigen Frequenzen gewichtet. Diese Gewichtung bringt Vorteile bei einer Verschiebung des Peaks. Hierbei ist die Auswertevorrichtung ausgebildet, um die empfangenen Signale einer Merkmalsextraktion zu unterziehen, wobei die extrahierten Merkmale zur Mustererkennung dienen. Die extrahierten Merkmale eines oder mehrere der Folgenden umfassen oben genannte stochastische Mittel. Weitere stochastische oder statische Mittel sind darüber hinaus denkbar. Die Schiefe ist eine statistische Kennzahl, die die Art und Stärke der Asymmetrie einer Wahrscheinlichkeitsverteilung beschreibt. Sie zeigt an, ob und wie stark die Verteilung nach rechts (positive Schiefe) oder nach links (negative Schiefe) geneigt ist.

Die Kurtosis ist eine Maßzahl für die Steilheit bzw. "Spitzigkeit" einer (eingipfligen) Wahrscheinlichkeitsfunktion, statistischen Dichtefunktion oder Häufigkeitsverteilung. Die Wölbung ist das zentrale Moment 4. Ordnung. Verteilungen mit geringer Wölbung streuen relativ gleichmäßig; bei Verteilungen mit hoher Wölbung resultiert die Streuung mehr aus extremen, aber seltenen Ereignissen.

Der Median oder Zentralwert ist ein Mittelwert für Verteilungen in der Statistik. Der Median einer Auflistung von Zahlenwerten ist der Wert, der an der mittleren Stelle steht, wenn man die Werte der Größe nach sortiert.

Die Klassifikatoren ergeben sich aus der Clusterbildung und werden vorzugsweise am Ende je nach Clusterbildung gewählt.

Mit Hilfe des Klassifikators kann dem Signal ein Zustand zugeordnet werden. Alle Klassifikatoren brauchen Trainingsdaten. Mit Hilfe dieser Daten kann der Klassifikator dann seinen Merkmalsraum aufbauen. Desto besser die Trainingsdaten sind, desto besser ist der Merkmalsraum und die Treffgenauigkeit des Klassifikators.

Der Abstandsklassifikator bestimmt den Abstand eines Punktes zu den vorhanden Klassen. Das Abstandsmaß zwischen einem Punkt und eines Clusters kann mit dem euk-lidischen Abstand, dem gewichteten euklidischen Abstand oder dem Mahalanobis-Abstand bestimmt werden. Bei der vektoriellen Betrachtung des euklidischen Abstands ist zu beachten, dass die Werte normiert werden, damit eine gute Auswertung gefahren werden kann.

Bei dem Support-Vector-Klassifikator/ Stütz-Vektor-Klassifikator lässt sich durch eine vektorielle Betrachtung der Merkmale bestimmen, ob ein Wertepaar links oder rechts einer Geraden liegt.

Ein möglicher Klassifikatior ist der Fuzzy-Pattern-Klassifikator. Der Fuzzy-Pattern-Klassifikator wird in vielen Systemen verwendet. Der Grundgedanke liegt darin die Zugehörigkeit zu einer Klasse mit Hilfe von Stützpunkten zu bestimmen. Dabei gibt dieser Klassifikator nur eine Wahrscheinlichkeit zur Zugehörigkeit zu dieser Klasse wieder. Als Eingangsvariablen für diese Klasse werden Merkmale verwendet, diese Merkmale könnten stochastische Werte sein, wie Schiefe, Wölbung oder Standardabweichung, aber auch die durch die FFT ermittelten Peaks könnten Merkmale darstellen. Diese Merkmale werden dann durch unterschiedliche Funktionen bewertet. Hüllkurven stellen beliebte Funktionen innerhalb des Klassifikators dar.

Die Kalibrierungsfunktion soll den Klassifikator einstellen, sodass dieser den richtigen Zustand des Gerätes zurückgeben kann. Dazu wird am Anfang eine vorher definierte Anzahl von Sweeps durchgeführt, diese Daten werden dann für die Kalibrierung analysiert und die Merkmale extrahiert. Innerhalb der Kalibrierung werden die Merkmale dazu genutzt den passenden Klassifikator einzustellen. Bei der Skimmererkennung sollte die Kalibrierung eine Trendgerade ermitteln und diese dann verschieben. Im Rahmen der Anbautenerkennung werden aus den Merkmalen die spezifischen stochastischen Mittel für den Abstandsklassifikator bestimmt. Am Ende der Kalibrierung wird der Klassifikator mit Hilfe der Aufnahmen kontrolliert, damit er im Rahmen der Kalibrierungsdaten immer die richtige Entscheidung trifft. Die Trainingsdaten müssen dafür frei von Verfälschungen sein. Das bedeutet, dass die Aufnahmen nicht durch skimmerartige Bauteile, geöffneter Klappe, Anbauten oder sonstige Manipulationen verfälscht werden dürfen. Dies gilt natürlich auch für den Aufstellungsort. Eine Kalibrierung im Moment atypischer Quereinflüsse, wie beispielsweise das Bohnern des Bodens im Foyer oder eine Baustelle, sollte ausgeschlossen werden.

Um die Cluster innerhalb eines Bereiches zielführend einzuordnen, bedarf es der Bestimmung bewertbarer, aussagekräftiger Klassifikatoren. Vorteilhafterweise werden bei der vorliegenden Erfindung zur Lösung der Aufgabenstellung ein Stütz-Vektor- und ein Abstandsklassifikator verwendet.

Der Stütz-Vektor-Klassifikator dient der Detektion von Skimmern. Er wird durch zwei Punkte in einem zweidimensionalen Merkmalsraum beschrieben. Für eine sichere Zuordnung werden zwei Klassifikatoren dieser Art verwendet. Für die Detektion sonstiger Veränderungen kann der Abstandsklassifikator herangezogen werden. Er wird durch einen Punkt und Radius vollständig beschrieben

### Figurenbeschreibung:

Nachfolgend wird die Erfindung im Detail anhand von Ausführungsbeispielen und unter Bezugnahme auf die beiliegenden Zeichnungen beschrieben, die folgende schematische Darstellungen wiedergeben:
- Fig. 1a: zeigt den Aufbau der Kartenleseeinrichtung in einer Querschnittansicht
- Fig. 1b: zeigt in einer dreidimensionalen Ansicht den Aufbau einer Kartenleseeinrichtung zum Einbau in ein Selbstbedienungsterminal;
- Fig. 2: zeigt in einer schematischen Darstellung die Anordnung von Sensorleisten zum Prüfen der Dimensionen (Länge, Breite, Höhe) einer Karte;
- Fig. 3a-c: veranschaulichen die logischen Zusammenhänge zwischen den durchgeführten Verfahrensschritten; a= Karteneinschub, b=Retract c=Prüfung der Hüllenintegrität
- Fig. 4: zeigt einen Sweep, der in 6 Frequenzbereiche unterteilt ist, die unterschiedlich ausgewertet werden;
- Fig. 5a,5b: zeigen Clusterungen und deren Trennungen,
- Fig. 6a-c: zeigen Gewichtete Merkmalsräume, von einem Sensor, einem Differenzsignal das nicht manipuliert und manipuliert ist,
- Fig. 7: Klassifkator-Darstellungen in unterschiedlichen Bereichen, die in Fig.4 dargestellt wurden.

### Detaillierte Beschreibung in Bezug auf die Figuren:

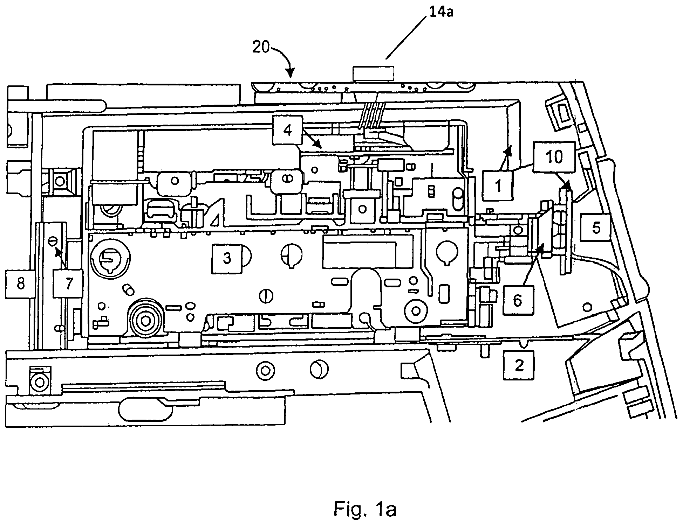

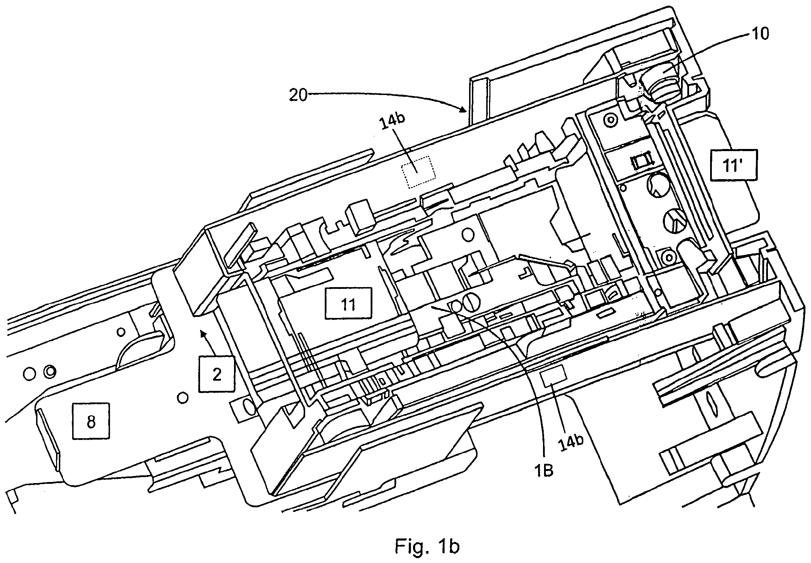

In den Figuren 1a und 1b ist in schematischer Weise der Aufbau einer Kartenleseeinrichtung 20 dargestellt, die im Inneren einen Aufnahmeraum 13 für eine zu lesende Karte 11 aufweist. Der Aufnahmeraum 13 umfasst auch den eigentlichen Kartenleser 3 bzw. Kartenleseelemente, die beispielsweise eine Kontaktstation zum Auslesen von Karten-Chips und einen Lesekopf zum Auslesen von Magnetstreifen umfassen. Die auszulesende Karte 11 bzw. 11' wird in an sich bekannter Weise über Transportmittel von dem Einführschlitz in den Aufnahmeraum 13 transportiert, um dort optimal zu den Kartenleseelementen für den Auslesevorgang positioniert zu werden. Hierfür können übliche Führungs- und Anschlagelemente vorgesehen werden.

Unter dem Begriff Kartenleseeinrichtung wird hier die Gesamtanordnung (s. Fig. 1b) verstanden, welche u.a. das Gehäuse 1, Grundplatte 2, Kartenleser 3, ggfs sog. IDKG-Einsatz 5, additive Sensoren 6, insbes. Lichtschranke(n) bzw. Sensorleiste(n), optionaler Kamera 10 und Karten-Transportmittel umfassen kann. Je nach Ausstattung können auch weniger Komponenten verbaut sein. Unter Kartenleser wird hier im Wesentlichen die Vorrichtung 3 verstanden, welche für das eigentliche Auslesen der Kartendaten vorgesehen ist. Das Gehäuse 1 umschließt in Verbindung mit der Grundplatte 2 den Karenleser 3 vollständig. Vorzugsweise sind die Wandlerelemente 14a,b (mechatronische Wandler) am/im Gehäuse 1 angebracht; grundsätzlich ist die Anordnung aber auch an allen anderen Einzelkomponeten denkbar. Hierzu ist es sinnvoll, eine Überlagerung der modalen Dehnungen in den zu betrachtenden Frequenzbereichen vorzunehmen. Signifikante und damit gut geeignete Postionen werden dadurch visualisiert. Die Wandlerpositionierung kann vorgenommen werden nach der Analyse des Gehäuses. In der vorliegenden Ausführungsform sind oben auf dem Gehäuse ein Piezo-Element 14a angeordnet als Aktor und zwei 14b an den Seiten als Sensoren.

Einzige Öffnungen des Gehäuses sind die Öffnung für Karteneinschub (IDKG-Einsatz 5) und der damit verbundenen Detektion durch die additiven Sensoren 6 sowie der Durchbruch für eingezogene Karten, welche durch eine Lichtschranke7 überwacht wird.

Wie insbesondere die Fig. 1b zeigt, weist die Kartenleseeinrichtung 20 in ihrem hinterem Teil auch einen Bereich 8 auf, der für das Einbehalten von Karten 11 vorgesehen ist, die aufgrund von nicht erfüllten Bedingungen von dem SB-Terminal nicht wieder an den Benutzer zurückgegeben werden sollen. Die Ablage 8, die auch als Retract-Bereich bezeichnet wird, befindet sich am Ende der Transportbahn, d.h. hinter dem Aufnahmeraum 13, in dem die jeweilige Karte ausgelesen wird. Nach dem Auslesen bzw. Ausleseversuch wird eine Karte 11, die einbehalten werden soll, in den Einzugs-Bereich 8 weitertransportiert.

Die Kartenleseeinrichtung 20 ist mit der in Fig. 2 gezeigten und an dem Sensorträger 6 (der Fig. 1A) montierten Sensorik ausgestattet, mit der die räumliche Dimensionen (Länge, Breite und ggf. Höhe) der eingeführten Karte 11 exakt erfasst und überprüft werden kann. Optional ist mit dieser Sensorik eine Materialbestimmung über diskrete Spektroskopie im IR-Bereich möglich.

Die Sensorik ist so ausgebildet, dass zumindest eine Dimension erfasst werden kann, vorzugsweise Breite b und Länge 1, optional noch die Höhe der Karte. Der Sensor 6B misst insbesondere die Breite b der Karte. Dieser kann auch für die Messung der Karten-Länge 1 verwendet werden, z.B. durch eine zeitgetriggerte Erfassung an dem Sensor 6B, wobei anhand der Einzugsgeschwindigkeit / -dauer die Karten-Länge 1 ermittelt. Es können auch für jede Dimension einzelne Sensoren verwendet werden. Insbesondere können Sensorleisten eingesetzt werden, wie z.B. opto-elektrische Sensorleisten vom Typ TSL208R, die von der Firma TAOS hergestellt werden und 512 Photodioden in einem Abstand von 125 µm aufweisen. Somit kann eine sehr genaue Messung durchgeführt werden. Des Weiteren kann noch eine zusätzliche Sensorik 6C an dem Kartenleser bzw. dem Aufnahmeraum 13 angeordnet sein, um auch die Höhe der Karte (in Z-Richtung) zu messen bzw. zu überprüfen. Je nach Anwendungsfall kann es aber ausreichen, nur eine oder zwei Dimensionen, vorzugsweise Länge und/oder Breite, zu messen.

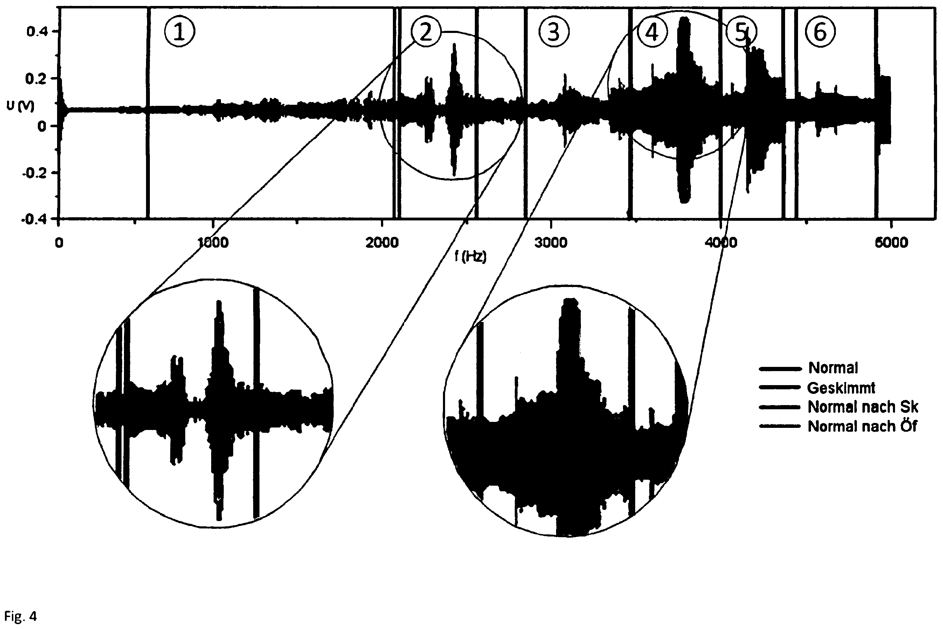

Durch die installierten Sensoriken 6A, 6B, 6C und/oder 6D (optional) sowie mit der Lichtschranke 7 in Verbindung mit dem Signal zum Retract vom Kartenleser 3 können die Durchbrüche des Gehäuses gesichert werden. Zusätzlich kann hierfür auch noch eine optional installierte Kamera 10 (s. Fig. 1b) genutzt werden. Die funktionalen Zusammenhänge werden anhand der Figuren 4a-c näher erläutert.

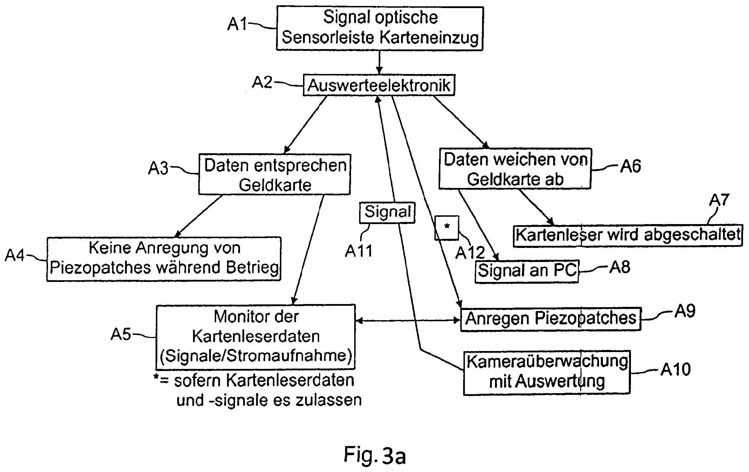

Zunächst wird auf die Fig. 3a Bezug genommen, die sich auf eine Prüfung der Dimensionen der eingeführten Karte 11 bezieht welche mittels der opto-elektrischen Sensorik durchgeführt wird. In der Fig. 4a sind funktionale Blöcke A1-A12 dargestellt, die folgendes veranschaulichen:
A1: Die opto-elektrischen Sensorelemente erzeugen Messsignale für die Breite b, die Länge 1 und optional für die Höhe der Karte 11.
A2: Die Auswertevorrichtung bzw. -elektronik 4 prüft die Messdaten bzw. Messwerte, indem sie diese im Wesentlichen mit Standardwerten für genormte Bankkarten bzw. Geldkartenvergleicht.
A3: Wenn die Messdaten den Standardwerten entsprechen, handelt es sich um eine normale Geldkarte.
A4: Eine Anregen mittels des piezo-elektrischen Sensorfeldes 6D wird vorzugsweise nicht während des Betriebs des Kartenlesers durchgeführt.
A5: Jedoch wird eine Überwachung von Kartenleserdaten durchgeführt, insbesondere von den Kartenlesersignalen und/oder der Stromaufnahme des Kartenlesers.
A6. Sofern im Block A2 festgestellt wurde, dass die Messdaten von den Standardwerten abweichen, handelt es sich um keine normale Geldkarte und es wird angenommen, dass ein Manipulationsversuch vorliegt.
A7: Der Kartenleser wird abgeschaltet; wenn möglich wird die manipulierte Karte bzw. Kartenattrappe eingezogen.
A8: Die Softwaresteuerung des SB-Terminals, hier ein PC, erhält ein Warnsignal.
A9: Ein Anregen zu definierten Betriebszeitpunkten zur Feststellung der Integrität der Hülle kann durchgeführt werden
A10: Eine optionale Kameraüberwachung (s. 10 in Fig. 1a) kann Signale (Bild, Video, und/oder Audio) erzeugen.
A11: Die Kamera-Signale werden an die Auswertevorrichtung19 bzw. den PC gesendet, um den Manipulationsversuch besser zu dokumentieren und ggf. Bilder von verdächtigen Personen zwecks späterer Identifizierung aufzunehmen.
A12: ist optional und zeigt an, dass Block A9 ausgeführt wird, sofern Kartenleserdaten und -signale es zulassen.

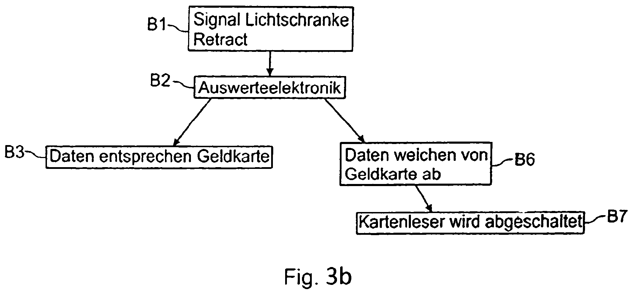

Die Fig. 3b bezieht sich auf eine Überprüfung des Retract-Bereichs mittels der dort installierten Sensorik bzw. Lichtschranke 7 (s. Fig. 1a). In der Fig. 4b sind funktionale Blöcke B1-B12 dargestellt, die folgendes veranschaulichen:
B1: Die opto-elektrische Sensorik bzw. Lichtschranke 7 am Retract-Schacht erzeugt Signale, wenn eine Karte 11 oder Attrappe bzw. ein Fremdgegenstand durch den Schacht befördert wird oder wenn von hinten durch das Fach 8 ein Fremdgegenstand in den Kartenleser 3 eingeführt werden soll.
B2: Die Auswerteelektronik gleicht das Ereignis mit dem Status des Kartenlesers ab, d.h. liegt ein retract vor, ist das Ereignis als in Ordnung einzustufen. Alle anderen Ereignisse werden als Manipulation bewertet
B3: Anhand der Signale bzw. Messwerte wird festgestellt, dass eine normale Geldkarte durch den Retract-Schacht 7 geführt wird bzw. dass ein normaler Retract-Vorgang stattfindet.
B6: Sofern im Block B2 festgestellt wurde, dass keine normale Geldkarte durch den Retract-Schacht 7 geführt wurde bzw. dass kein normaler Retract-Vorgang erfolgte, wird ein Manipulationsversuch angenommen.
B7: Der Kartenleser wird abgeschaltet.

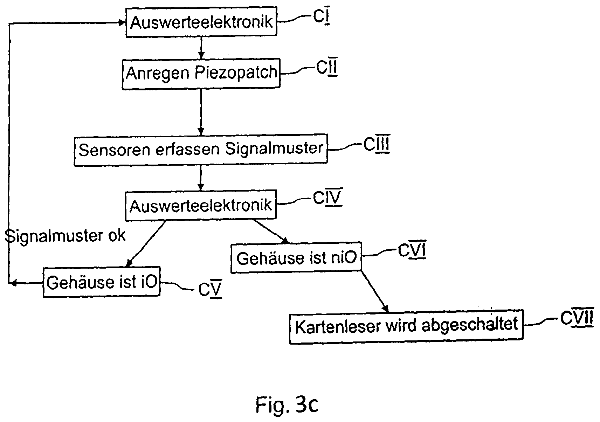

Die Fig. 3c bezieht sich auf eine Überprüfung der Integrität der Lesereinheit. Der in Fig. 4c anhand der Blöcke CI-CVII dargestellte funktionale Zusammenhang bezieht sich jedoch auf die Material-Prüfung des SB-Terminal-Gehäuses, um festzustellen, ob hieran manipuliert worden ist. In Fig. 4c wird auf die Überprüfung des Gehäuses (s. auch 1 in Fig. 1b) Bezug genommen:
CI: Die Auswertevorrichtung 4 veranlasst eine Überprüfung des Gehäuses, indem piezo-elektrische Aktoren, die am Gehäuse montiert sind, zum Schwingen angeregt werden, und indem Messdaten von dort montierten piezo-elektrischen Sensorfelder ausgewertet werden. Die Aktoren können in den Sensorfeldern (vergleichbar mit 6D in Fig. 1b) integriert sein bzw. einzelne Piezo-Elemente des jeweiligen Feldes sein, welche zur Schwingungsanregung angesteuert werden.
CII: Zuerst werden die piezo-elektrischen Aktoren mit bestimmten Frequenzen bzw. mittels Sweep angeregt.
CIII: Die Sensoren erfassen Signalmuster.
CIV: Die Auswertevorrichtung wertet gemäß dem hier beschriebenen Verfahren aus.
CV: Die Integrität des Gehäuses ist vorhanden, dann beginnt der Zyklus von vorn bei CI.
CVI: Die Integrität des Gehäuses ist nicht vorhanden, dann wird der Leser abgeschaltet.
CVII: Der Kartenleser wird abgeschaltet; ggf. sogar das ganze SB-Terminal.

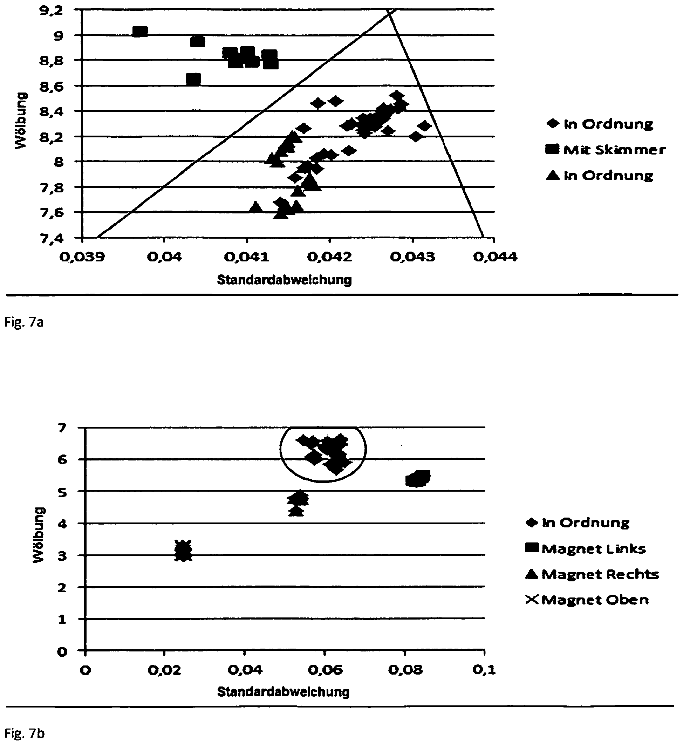

Nachfolgend wird die Überprüfung des Karten-Materials mittels des im Kartenleser installierten piezo-elektrischen oder optischen Sensorfeldes 6D (s. Fig. 2) im Detail beschrieben. Auch diese Überprüfung kann als eigenständige Lösung ausgeführt werden, wird aber hier als Teil des offenbarten Verfahrens unter Bezugnahme auf die Fig. 2 sowie Fig. 5-9 beschrieben:
Zur Überprüfung der Integrität des Gehäuses 1, der Kartenleseeinrichtung, des Karten-Materials und/oder des Aufnahmeraums für die Karte 11 werden die von dem/den Sensorfeld(ern) 6D kommenden Messsignale in der Auswertevorrichtung 4 zunächst einer Signalvorbereitung unterzogen.

Die Figur 4 zeigt einen Sweep von 100Hz bis 5kHz, der in 6 Frequenzbereiche unterteilt ist, die unterschiedlich ausgewertet werden; die Frequenzbereiche wurden bereits oben beschrieben:

| Bereich | Frequenzbereich |
|---|---|
| 1 | 650 - 2140 Hz |
| 2 | 2190 - 2550 Hz |
| 3 | 2810 - 3470 Hz |
| 4 | 3470 - 4000 Hz |
| 5 | 4000 - 4300 Hz |
| 6 | 4400 - 4880 Hz |

Im ersten Bereich befinden sich 45 Eigenmoden des Gehäuses, im zweiten Bereich sind 11 Eigenmoden. Es wird deutlich, dass das Verhalten des Gehäuses nicht vollkommen vorhersehbar und durch Modelle beschreibbar ist. Das System ist zu komplex. Daraus folgt, dass für jedes verbaute System eine eigene Kalibration gefahren werden sollte. Die Bereiche werden somit nach Kriterien wie Eigenmoden zerlegt, um in den Bereichen unterschiedliche Untersuchungen vorzunehmen. Die Bereiche ergeben sich somit im Wesentlichen durch die Betrachtung der Peaks des Signals. Der blaue Bereich zeigt einen normalen Verlauf.

In Figur 4 wurden 4 unterschiedliche Signale übereinandergelegt, um die Unterschiede zu verdeutlichen. Das blaue Signal stellt einen ordnungsgemäßen Zustand dar. Das rote Signal zeigt einen geskimmten Zustand und das türkise Signal einen Zustand, der aktuell nicht manipuliert ist, aber nach einer Manipulation. Das grüne Signal zeigt, einen ordnungsgemäßen Zustand, bei dem aber zuvor die Klappe des Gehäuses geöffnet wurde. In den Detailansichten ist deutlich zusehen, dass sich die Zustände voneinander unterscheiden. An Hand dieser Signale können die Bereiche bestimmt. Die Bereiche wurden so gewählt, dass Charakteristika wie Peaks oder offensichtliche Unterschiede enthalten sind. Der Bereich 1 enthält viele Eigenmoden des Systems. Der Bereich 2 hat einen Peak, der Auswertung gut genutzt werden könnte, da das geskimmte Signal eine deutlich höhere Amplitude aufweist. Bereich 3 enthält ein Peak. Die Bereiche 4 und 5 enthalten jeweils einen Peak mit deutlich erhöhter Amplitude. Es ist aber auch zusehen, dass die Amplitudenhöhen deutliche Unterschiede aufweisen zwischen den einzelnen Signalen. Der Bereich 6 enthält die letzten Eigenmoden, die mit dem Sweep aufgenommen wer-den können.

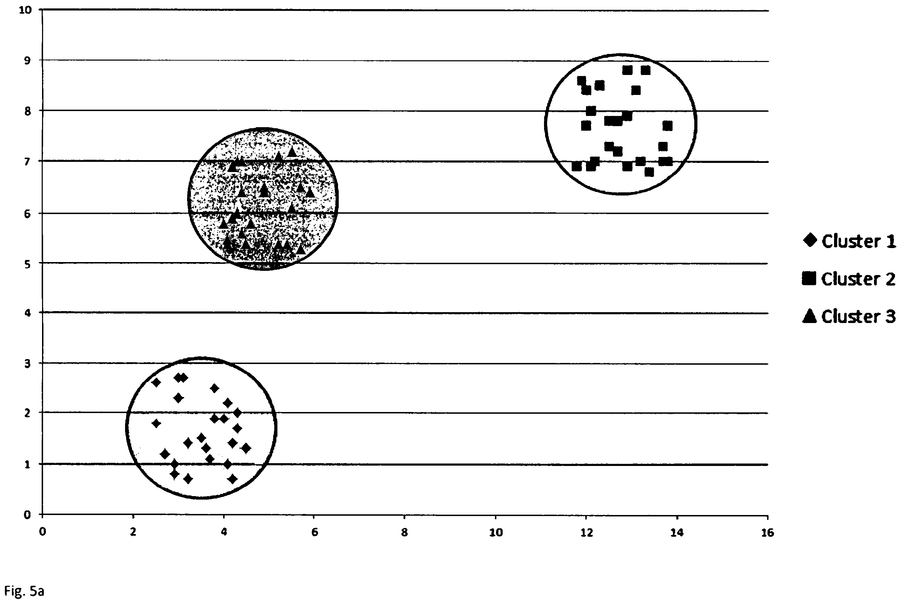

In Fig 5a ist eine beispielhafte Clusterverteilung zu sehen und wie diese durch einen Abstandsklassifikator zusammengefasst werden.

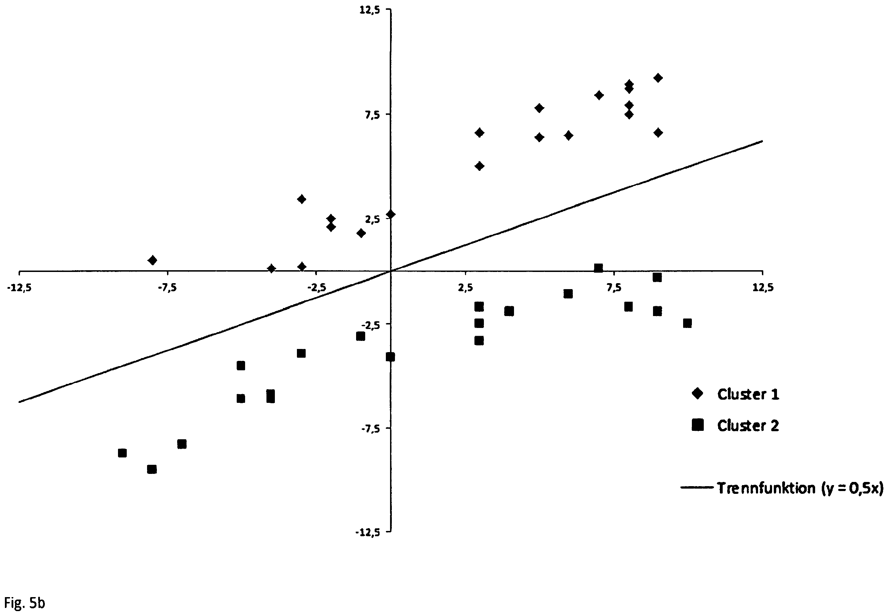

Eine beispielhafte Clustertrennung mit Hilfe einer Geraden ist der Fig 5b zu entnehmen. Schwierig bei der Trennung mit Hilfe einer Geraden ist die Tatsache, dass sich das Verfahren aufwendiger trainieren lässt, da die Gerade aus den Trainingsdaten extrahiert werden muss. Wenn man die Möglichkeit hat den Klassifikator mit Trainingsdaten zu trainieren, die von beiden Zuständen stammen, kann die Gerade zwischen die beiden Clustern gelegt werden. Spiegeln die Trainingsdaten aber nur einen Zustand wieder, wird es schwer zu sagen welcher Zustand rechts oder links der Geraden liegt, da die Position des anderen Zustandsclusters unbekannt ist.

Bei der Merkmalsextraktion kommen wurden vorliegenden die stochastischen Mittel betetrachtet.

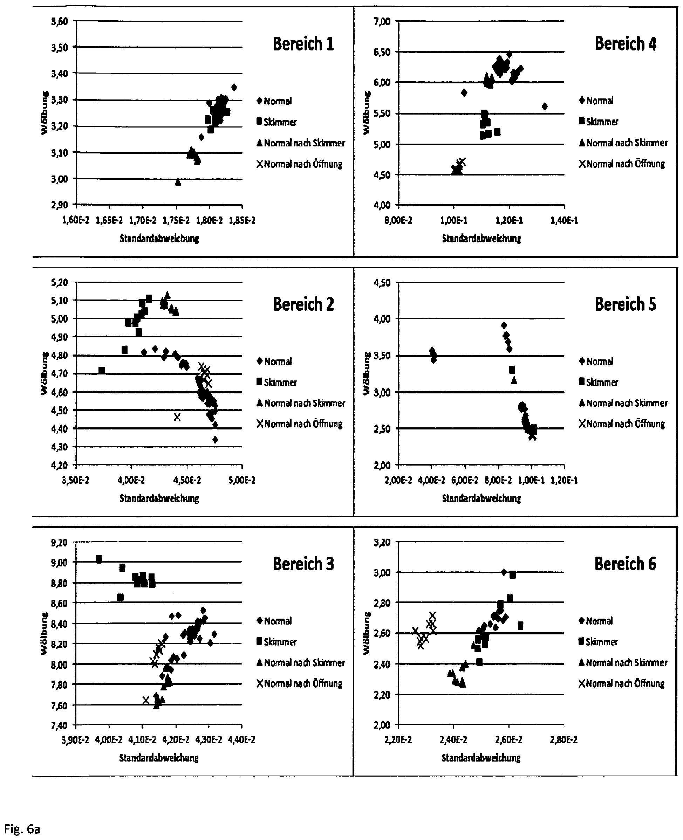

Die Figuren 6a-6c zeigen exemplarisch die Merkmalsräume, die für den Algorithmus herangezogen werden. Diese Merkmalsräume zeigen die einzelnen Variationen, die durch die Betrachtung der Signale und die Merkmalsextraktion möglich sind. Es werden die 6 Bereiche unterschieden. Es ist zu erkennen, dass sich ohne Signalaufbereitung Cluster in den unterschiedlichsten Bereichen bilden. Eine Gewichtung der Datenpunkte ist nahezu unerheblich, kann allerdings im Einzelfalle sinnvoll sein. Bei näherer Betrachtung der Merkmalsräume zeigt sich ein geringfügiger positiver Effekt in den einzelnen Cluster.

Der Sensor 14b, welcher an einer Seite angeordnet ist, bildet in den Bereichen 2 und 3 reproduzierbare Cluster für den Manipulationsfall Skimming. Der Bereich 3 von Sensor 14b zeigt dabei eine bessere Möglichkeit für eine Klassifizierung mit Hilfe des Stütz-Vektor-Klassifikators.

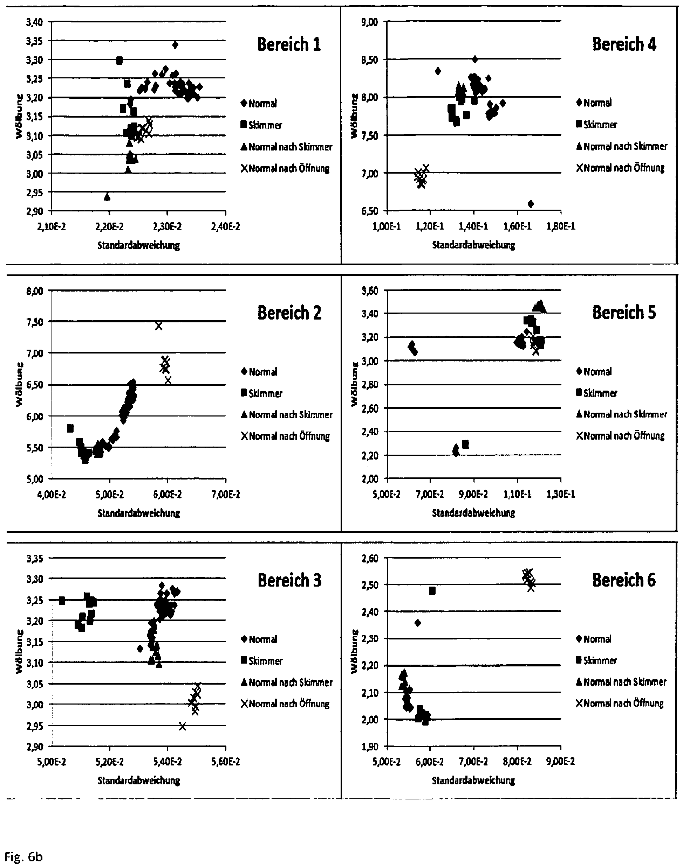

Das Differenzsignal (sieh Fig. 6a), welches durch eine Subtraktion zwischen den beiden Sensoren 14b gewonnen wird, zeigt sich augenscheinlich als gut geeignetes Auswertungsmerkmal, da eine größere Differenz zwischen dem Cluster des Normalzustandes und dem Cluster des geskimmten Zustands vorliegt (siehe Fig. 6b). Allerding scheint dieser Ansatz für eine Klassifizierung nur bedingt geeignet sein, es wird auf die Anwendung unten verwiesen.

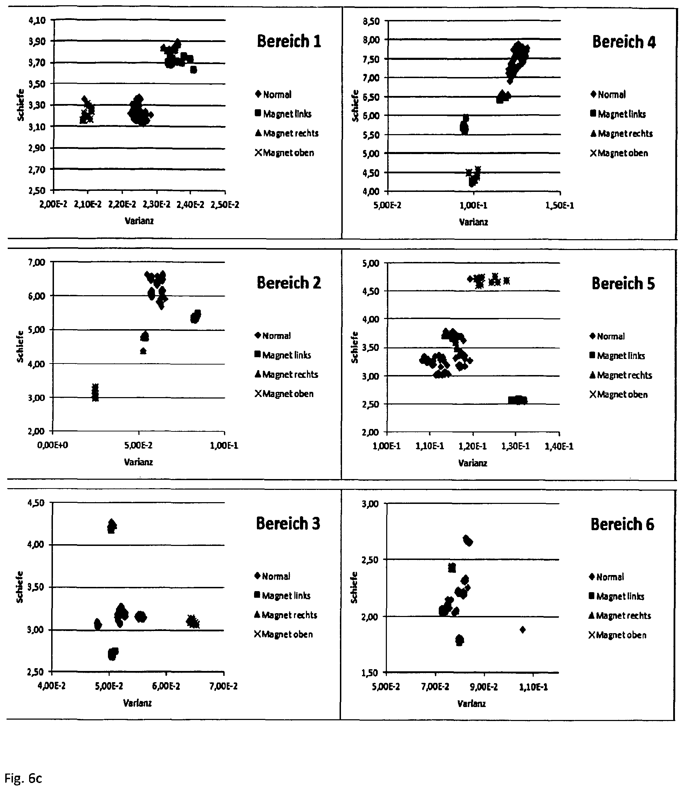

Für die Überprüfung auf weitere Manipulationsarten, wie Bohrungen, Anbauten oder sonstige Veränderungen am Gehäuse, wurden weitere Sensorreihen gefahren. Diese Reihen haben ergeben, dass der Bereich 2 eine gute Möglichkeit zur Analyse bereitstellt (siehe Fig 6c). Im Gegensatz zur Skimmerüberprüfung wird bei der Anbauüberprüfung das Differenzsignal ausgewertet, da sonst Veränderungen auf der gegenüberliegenden Seite des auszuwertenden Sensors nicht erkannt werden. Bei dieser Auswertung wird auf den Abstandsklassifikator zurückgegriffen.

Die Kombination unterschiedlicher Ansätze macht diesen Algorithmus komplex aber auch sehr flexible für jegliche Arten von Angriffen. Für jeden Klassifikator sollte eine Kalibrierungsfunktion genutzt werden. Die Herausforderung an der Kalibrierung des Stütz-Vektor-Klassifikators liegt in der Extraktion einer Trendgeraden aus den Merkmalswerten, welche folgend zur Differenzierung der Zustände um einen festen Wert verschoben wird. Die Kalibrierung des Ab-standsklassifikators erfolgt eindeutig durch die Bildung des Mittelwerts und der Standardabweichung.

Um die Cluster innerhalb eines Bereiches zielführend einzuordnen, bedarf es der Bestimmung bewertbarer, aussagekräftiger Klassifikatoren. Bei dem vorliegende Verfahren werden zur Lösung der Aufgabenstellung ein Stütz-Vektor- und ein Abstandsklassifikator verwendet.

Der Stütz-Vektor-Klassifikator dient der Detektion von Skimmern. Er wird durch zwei Punkte in einem zweidimensionalen Merkmalsraum beschrieben. Für eine sichere Zuordnung werden zwei Klassifikatoren dieser Art verwendet.

Für die Detektion sonstiger Veränderungen wird der Abstandsklassifikator herangezogen. Er wird durch einen Punkt und Radius vollständig beschrieben.

Bei der Speicherung der Klassifikatoren ist auf eine geringe Datenmenge zu achten.

Die extrahierten Merkmale umfassen z.B. Standarabweichung; Schiefe, Kurtosis, mittlere absolute Abweichung vom Median; Median der absoulten Abweichung. Die Standardabweichung ist ein Maß für die Streuung der Werte einer Zufallsvariablen um ihren Erwartungswert. Die Schiefe ist eine statistische Kennzahl, die die Art und Stärke der Asymmetrie einer Wahrscheinlichkeitsverteilung beschreibt. Sie zeigt an, ob und wie stark die Verteilung nach rechts (positive Schiefe) oder nach links (negative Schiefe) geneigt ist. Die Kurtosis ist eine Maßzahl für die Steilheit bzw. "Spitzigkeit" einer (eingipfligen) Wahrscheinlichkeitsfunktion, statistischen Dichtefunktion oder Häufigkeitsverteilung. Die Wölbung ist das zentrale Moment 4. Ordnung. Verteilungen mit geringer Wölbung streuen relativ gleichmäßig; bei Verteilungen mit hoher Wölbung resultiert die Streuung mehr aus extremen, aber seltenen Ereignissen.

Der Median oder Zentralwert ist ein Mittelwert für Verteilungen in der Statistik. Der Median einer Auflistung von Zahlenwerten ist der Wert, der an der mittleren Stelle steht, wenn man die Werte der Größe nach sortiert. Unter mittlere absolute Abweichung vom Median versteht man die Streuung um den Median. Unter Streuung (auch Dispersion oder mittlere absolute Abweichung) fasst man in der deskriptiven Statistik und in der Stochastik verschiedene Maßzahlen zusammen, die die Streubreite von Werten einer Häufigkeitsverteilung oder Wahrscheinlichkeitsverteilung um einen geeigneten Lageparameter herum beschreiben. Die verschiedenen Berechnungs-methoden unterscheiden sich prinzipiell durch ihre Beeinflussbarkeit beziehungsweise Empfindlichkeit gegenüber Ausreißern. Die Streuung der Häufigkeitsverteilung wird als Standardfehler bezeichnet.

Neben der Installation von der opto-elektrischen Sensorik zur Prüfung der Karten-Dimensionen (s. Sensorleisten 6A und 6B sowie Sensor 6C in Fig. 1a) und dem piezo-elektrischen Sensorfeld 6D zur Prüfung des Karten-Materials und/oder des Zustands des Aufnahmeraums, kann das Gehäuse 1 des SB-Terminals (Fig. 1b) auch mit Piezo-Patches bestückt sein, welche Manipulationen am Gehäuse selbst überwachen. Das Gehäuse kann aus Stahl und/oder Kunststoff gefertigt sein. Es bildet mit der Grundplatte 2 und dem IDKG-Einsatz 5 ein geschlossenes Gehäuse. Die einzigen Öffnungen sind die Kartendurchlässe für Karteneinschub und Karten-Retract (Bereich 8). Die Piezo-Patches sind vorzugsweise aufgeklebt, können aber auch direkt in einem Kunststoffteil abgespritzt werden. Die Sensoren werden von der Auswerteelektronik bzw. Auswertevorrichtung 4 betrieben. Die Sensoren können aktorisch wie sensorisch betrieben werden. Dazu regt die Auswertevorrichtung 4 einen der Sensoren aktorisch mit einem definierten Muster an, die restlichen Piezo-Patches erfassen das Anregungssignal. Die Elektronik gleicht das gemessene Signal mit dem theoretischen Signal ab.

Des Weiteren ist der PC des SB-Terminals (z.B. ATM) mit der Elektronik verbunden. Die Elektronik bestromt den Kartenleser und ist auch (optional) logisch mit diesem verbunden. Ersteres dient zum definierten Ein- und Ausschalten des Kartenlesers, letzteres zur Verarbeitung von etwaigen Firmware-Signalen des Kartenlesers, wie z.B. einem Retract oder einem Karteneinzug. Sofern die Signalausgabe des Kartenlesers in dessen Firmware noch nicht implementiert ist, kann alternativ die Stromaufnahme des Kartenlesers gemessen werden und so Rückschluss auf die Betriebsart (Karteneinzug/Retract/Ausgabe/Stand-by) des Lesers führen.

Der Einschubbereich (s. Fig. 1b) führt und zentriert die Karte 11 zum Kartenleser 3. Er ist bestückt mit der besagten opto-elektrischen Sensorik, d.h. Sensor- und Lichtschrankenleiste(n), die die geometrischen Abmessungen der Karte vollständig erfasst bzw. erfassen. Mit Hilfe der mindestens einen Sensorleiste, z.B. 6B in Fig. 2, kann so zwischen einer regulären, gültigen Karte oder einem ungültigen Gegenstand, wie z.B. einer Vorrichtung zum Einbringen eines Skimmers in das Innere des Gerätes, differenziert werden. Die Signale der Sensorleiste(n) 6A und/oder 6B sowie des optionalen Sensors 6C werden von der Auswertevorrichtung 4 ausgewertet. Gleiches gilt für die Lichtschranke 7 an der Retract-Ausgabe. Hier wird jedoch nicht qualitativ die Belegung der Lichtschranke bewertet, sondern eine Informationsfusion mit dem Event bzw. Ereignis "Retract des Kartenlesers" erstellt. Darüber hinaus kann die Auswertevorrichtung 4 Signale an den PC senden, der dann wiederum durch eine Software (z.B. OSG) die optionale Überwachungskamera 10 aktiviert und die Integrität des Kartenschlitzes prüft.

### Bezugszeichenliste

- 20: Kartenleseeinrichtung für Selbstbedienungsterminal
- 1: Gehäuse mit Wandlerelementen
- 2: Grundplatte
- 3: Kartenleser
- 4: Auswerteelektronik / Auswertevorrichtung
- 5: IDKG-Einsatz
- 6: additive Sensoren auf Sensorträger für Karteneinschubüberwachung
- 7: Lichtschranke am Einzugs-Bereich (Retract-Bereich)
- 8: Ablagefach Retract-Karten / Einzugsbereich (Retract-Bereich) für einzubehaltene Karten
- 10: Kamera(s) (optional) 11 Geldkarte (EC/Master/Visa) eingeführt
- 11': Geldkarte (EC/Master/Visa) im Einführschacht
- 13: Aufnahmeraum für Karte (Bereich des Kartenlesers)
- 6A, 6B 6B: linear sich erstreckende Sensoranordnungen, hier Sensorleisten zum Prüfen der Länge 1 bzw. Breite b der Karte
- 6C: zusätzliche Sensorik zum Prüfen der Höhe der Karte
- 6D: Sensorfeld mit Piezo-elektrischen Sensorelementen zum Prüfen des Kartenmaterials
- 14a: mechantronischer Wandler /piezo-Element (Aktor)
- 14b: mechantronischer Wandler /piezo-Element (Sensor)

## Patentansprüche

1. Kartenleseeinrichtung (20) für ein Selbstbedienungsterminal, mit einem Gehäuse (1), in das eine Karte (11) einziehbar ist, um ausgelesen zu werden, mit mechatronischen Wandlern umfassend Sensoren und/oder Aktoren, die mit einer Auswertevorrichtung (4) verbunden sind,
die mechatronischen Wandler (14) sind so in oder am Gehäuse (1) angeordnet dass
die Integrität der Kartenleseeinrichtung (20), insbesondere des Gehäuses (1), prüfbar ist, wobei die Auswertevorrichtung eingerichtet ist, um von den mechatronischen Wandlern ein Signal zu empfangen, das von einem Teil der mechatronischen Wandler angeregt ist und von einem Teil der mechatronischen Wandler detektiert wird, um dieses mit Referenzdaten zu vergleichen, und um bei einer definierten Abweichung ein Warnsignal auszugeben, das für eine fehlende Integrität der Kartenleseeinrichtung steht;
die mechatronischen Wandler (14) sind piezo-elektrische Elemente , die als Aktor oder als Sensor fungieren, so dass ein Aktor auch als Sensor fungieren kann, **dadurch gekennzeichnet,**
**dass** abhängig von der Ansteuerung eine der beiden Funktionalitäten der mechatronischen Wandler (14) implementiert ist, wobei die Auswertevorrichtung die Funktion als Aktor oder Sensor bestimmt.

2. Die Karteleseeinrichtung (20) nach dem vorhergehenden Anspruch 1, **dadurch gekennzeichnet, dass** in dem Gehäuse (1) ein Aufnahmeraum (13) angeordnet ist, in dem die eingezogene Karte (11) positionierbar ist, um auf der Karte gespeicherte Daten auszulesen, wobei die mechatronischen Wandler (14) so ausgebildet und angeordnet sind, dass der Inhalt des Aufnahmeraums Einfluss auf Signale der mechatronischen Wandler hat.

3. Die Karteleseeinrichtung (20) nach einem oder mehreren der vorhergehenden Ansprüche, **dadurch gekennzeichnet, dass** die Auswertevorrichtung Referenzdaten für unterschiedliche Zustände der Kartenleseeinrichtung verwaltet, insbesondere, ob sich eine Karte im Aufnahmeraum befindet oder ob sich keine Karte im Aufnahmeraum befindet, vorzugsweise werden die Referenzdaten von einem Klassifikator verwaltet.

4. Die Karteleseeinrichtung (20) nach einem oder mehreren der vorhergehenden Ansprüche, **dadurch gekennzeichnet, dass** die Auswertevorrichtung ausgebildet ist, um abhängig von Ereignissen von den mechatronischen Wandlern ein Signal zu empfangen, das von einem Teil der mechatronischen Wandler angeregt ist und von einem Teil der mechatronischen Wandler detektiert wird, wobei vorzugsweise das Ereignis eines oder mehrere der Folgenden ist: Ablauf einer Zeitspanne, Detektion durch einen Sensor, dass eine Karte eingeschoben wurde.

5. Die Kartenleseeinrichtung (20) nach einem oder mehreren der vorhergehenden Ansprüche, **dadurch gekennzeichnet, dass** die piezo-elektrischen Elemente am Gehäuse (1) und an Bauteilen der Kartenleseeinrichtung befestigt sind, und die Aktoren vorzugweise mit der Eigenfrequenz der Bauteile und/oder Bauteilgruppen oder dem Gehäuse betrieben werden, wobei
vorzugsweise mindestens zwei piezo-elektrische Elemente am Gehäuse (1) angeordnet sind ein piezo-elektrisches Element fungiert als Sensor und eines als Aktor, wobei äußerst vorzugsweise 3 piezo-elektrische Elemente eingesetzt werden, zwei an den Seiten des Gehäuses (1), die als Sensor dienen, und ein piezo-elektrisches Element auf dem Gehäuse (1), das als Aktor dient.

6. Die Kartenleseeinrichtung (20) nach einem oder mehreren der vorhergehenden Ansprüche, **dadurch gekennzeichnet, dass** die Auswertevorrichtung ausgebildet ist, um eine Mustererkennung auf der Basis einer Kalibrierung vorzunehmen, wobei vorzugsweise die Auswertevorrichtung den Aktor anregt, um einen Sweep von 100 Hz bis 5 kHz durchzuführen, der bei 100Hz startet und bei 5kHz endet, und wobei vorzugsweise der Sweep für die Analyse in Frequenzbereiche aufgeteilt wird oder nur in Teilfrequenzen anregt wird, wobei auf jeden Frequenzbereich unterschiedliche Verfahren zur Mustererkennung anwendbar sind, wobei vorzugsweise
auf die Frequenzbereiche eine Merkmalsextraktion anwendbar ist, um dann auf den extrahierten Merkmalen Klassifikatoren anzuwenden, die den Zustand bestimmen.

7. Selbstbedienungsterminal, insbesondere Geldautomat, mit einer Kartenleseeinrichtung **dadurch gekennzeichnet, dass** die Kartenleseeinrichtung (20) nach einem der Ansprüche 1-6 ausgebildet ist.

8. Verfahren zur Überwachung eines Selbstbedienungsterminals, insbesondere eines Geldautomaten, mit einer Kartenleseeinrichtung (20), die ein Gehäuse (1) aufweist, in das eine Karte (11) einziehbar ist, um ausgelesen zu werden, mit mechatronischen Wandlern umfassend Sensoren und/oder Aktoren, die mit einer Auswertevorrichtung (4) verbunden sind,
die mechatronischen Wandler sind so in oder am Gehäuse (1) angeordnet dass die
Integrität der Kartenleseeinrichtung (20), insbesondere des Gehäuses (1) mit Hilfe der mechatronischen Wandler geprüft wird, wobei die Auswertevorrichtung von den mechatronischen Wandlern ein Signal empfängt, das von einem Teil der mechatronischen Wandler angeregt wird und von einem Teil der mechatronischen Wandler detektiert wird, um dieses mit Referenzdaten vergleicht, und um bei einer definierten Abweichung ein Warnsignal auszugeben, das für eine fehlende Integrität der Kartenleseeinrichtung steht.
die mechatronischen Wandler sind piezo-elektrische Elemente, die als Aktor oder als Sensor fungieren, so dass ein Aktor auch als Sensor fungieren kann,
**dadurch gekennzeichnet, dass**
abhängig von der Ansteuerung eine der beiden Funktionalitäten des mechatronischen Wandlers implementiert ist, wobei die Auswertevorrichtung die Funktion als Aktor oder Sensor bestimmt.

9. Verfahren nach dem vorhergehenden Anspruch **dadurch gekennzeichnet, dass** in dem Gehäuse (1) ein Aufnahmeraum angeordnet ist, in dem die eingezogene Karte (11) positionierbar ist, um auf der Karte gespeicherte Daten auszulesen, wobei die mechatronischen Wandler so ausgebildet und angeordnet sind, dass der Inhalt des Aufnahmeraums Einfluss auf Signale der mechatronischen Wandler hat, wobei vorzugsweise die Auswertevorrichtung Referenzdaten für unterschiedliche Zustände der Kartenleseeinrichtung verwaltet, insbesondere, ob sich eine Karte im Aufnahmeraum befindet oder ob sich keine Karte im Aufnahmeraum befindet, um in Abhängigkeit vom Zustand unterschiedliche Referenzdaten für den Vergleich zu verwenden,
wobei vorzugsweise die Auswertevorrichtung abhängig von Ereignissen von den mechatronischen Wandlern das Signal empfängt, das von einem Teil der mechatronischen Wandler angeregt ist und von einem Teil der mechatronischen Wandler detektiert wird, wobei ein Ereignis eines oder mehrere sein kann: Ablauf einer Zeitspanne, Detektion durch einen Sensor, dass eine Karte eingeschoben wurde.

10. Verfahren nach einem oder mehreren der vorhergehenden Verfahrensansprüche, **dadurch gekennzeichnet, dass** die piezo-elektrischen Elemente im hörbaren Schallbereich betrieben werden, und wobei die piezo-elektrischen Elemente am Gehäuse (1) oder an Bauteilen der Kartenleseeinrichtung befestig sind, und die Aktuatoren vorzugweise mit der Eigenfrequenz der Bauteile und/oder Bauteilgruppen oder dem Gehäuse betrieben werden, wobei vorzugsweise mindestens zwei piezo-elektrische Elemente am Gehäuse (1) angeordnet sind, und ein piezo-elektrisches Element als Sensor und eines als Aktor angesprochen wird.

11. Verfahren nach dem vorhergehenden Anspruch, **dadurch gekennzeichnet, dass** mindestens drei piezo-elektrische Elemente am Gehäuse angeordnet sind, wovon jeweils ein piezo-elektrisches Element an den Seiten des Gehäuses angeordnet ist, die als Sensor dienen, und ein piezo-elektrisches Element auf dem Gehäuse, das als Aktor dient, und wobei die piezo-elektrischen Elemente durch die Auswertevorrichtung entsprechend angeregt und ausgewertet werden.

12. Verfahren nach einem oder mehreren der vorhergehenden Verfahrensansprüche, **dadurch gekennzeichnet, dass** die Auswertevorrichtung ausgebildet ist, um eine Mustererkennung auf der Basis einer Kalibrierung durchzuführen.

13. Verfahren nach dem vorhergehenden Anspruch, **dadurch gekennzeichnet, dass** der Aktor ein Sweep von 100 Hz bis 5 kHz wählt, der bei 100Hz startet und bei 5kHz endet.

14. Verfahren nach dem vorhergehenden Anspruch, **dadurch gekennzeichnet, dass** der Sweep für die Analyse in Frequenzbereiche aufgeteilt wird oder nur in Teilfrequenzen angeregt wird, wobei auf jeden Frequenzbereich unterschiedliche Verfahren zur Mustererkennung anwendbar sind,
wobei vorzugsweise auf die Frequenzbereiche eine Merkmalsextraktion, um dann auf den extrahierten Merkmalen Klassifikatoren anzuwenden, die den Zustand bestimmen.

## Claims

1. Card reading device (20) for a self-service terminal, having a housing (1) into which a card (11) can be pulled in order to be read, having mechatronic transducers comprising sensors and/or actuators which are connected to an evaluation apparatus (4),
the mechatronic transducers (14) being arranged in or on the housing (1) in such a manner that the integrity of the card reading device (20), in particular the housing (1), can be checked, wherein the evaluation apparatus is configured to receive, from the mechatronic transducers, a signal which is excited by some of the mechatronic transducers and is detected by some of the mechatronic transducers, to compare said signal with reference data and, in the event of a defined deviation, to output a warning signal representing a lack of integrity of the card reading device;
the mechatronic transducers (14) being piezoelectric elements which function as an actuator or a sensor, with the result that an actuator can also function as a sensor,
**characterized**
**in that** one of the two functionalities of the mechatronic transducers (14) is implemented depending on the control, wherein the evaluation apparatus determines the function as an actuator or a sensor.

2. Card reading device (20) according to the preceding Claim 1, **characterized in that** a receiving space (13) is arranged in the housing (1), in which receiving space the card (11) which has been pulled in can be positioned in order to read data stored on the card, wherein the mechatronic transducers (14) are designed and arranged in such a manner that the content of the receiving space influences signals from the mechatronic transducers.

3. Card reading device (20) according to one or more of the preceding claims, **characterized in that** the evaluation apparatus manages reference data for different states of the card reading device, in particular whether there is a card in the receiving space or whether there is no card in the receiving space, preferably the reference data are managed by a classifier.

4. Card reading device (20) according to one or more of the preceding claims, **characterized in that** the evaluation apparatus is designed, depending on events, to receive, from the mechatronic transducers, a signal which is excited by some of the mechatronic transducers and is detected by some of the mechatronic transducers, wherein the event is preferably one or more of the following: expiry of a period of time, detection by a sensor that a card has been inserted.

5. Card reading device (20) according to one or more of the preceding claims, **characterized in that** the piezoelectric elements are fastened to the housing (1) or to components of the card reading device, and the actuators are preferably operated at the natural frequency of the components and/or groups of components or the housing, wherein
at least two piezoelectric elements are preferably arranged on the housing (1), one piezoelectric element functions as a sensor and one functions as an actuator, wherein 3 piezoelectric elements are extremely preferably used, two on the sides of the housing (1) which serve as a sensor and one piezoelectric element on the housing (1) which serves as an actuator.

6. Card reading device (20) according to one or more of the preceding claims, **characterized in that** the evaluation apparatus is designed to carry out a pattern recognition on the basis of a calibration, wherein the evaluation apparatus preferably excites actuator to carry out a sweep from 100 Hz to 5 kHz, which sweep starts at 100 Hz and ends at 5 kHz, and wherein the sweep is preferably divided into frequency ranges for the analysis or is excited only at partial frequencies, wherein different pattern recognition methods can be applied to each frequency range, wherein preferably a feature extraction can be applied to the frequency ranges in order to then apply classifiers which determine the state to the extracted features.

7. Self-service terminal, in particular cash machine, having a card reading device, **characterized in that** the card reading device (20) is designed according to one of Claims 1-6.

8. Method for monitoring a self-service terminal, in particular a cash machine, having a card reading device (20) which has a housing (1) into which a card (11) can be pulled in order to be read, having mechatronic transducers comprising sensors and/or actuators which are connected to an evaluation apparatus (4),
the mechatronic transducers being arranged in or on the housing (1) in such a manner that the integrity of the card reading device (20), in particular the housing (1), is checked with the aid of the mechatronic transducers, wherein the evaluation apparatus receives, from the mechatronic transducers, a signal which is excited by some of the mechatronic transducers and is detected by some of the mechatronic transducers, compares said signal with reference data and, in the event of a defined deviation, outputs a warning signal representing a lack of integrity of the card reading device,
the mechatronic transducers being piezoelectric elements which function as an actuator or a sensor, with the result that an actuator can also function as a sensor,
**characterized in that**
one of the two functionalities of the mechatronic transducer is implemented depending on the control, wherein the evaluation apparatus determines the function as an actuator or a sensor.

9. Method according to the preceding claim, **characterized in that** a receiving space is arranged in the housing (1), in which receiving space the card (11) which has been pulled in can be positioned in order to read data stored on the card, wherein the mechatronic transducers are designed and arranged in such a manner that the content of the receiving space influences signals from the mechatronic transducers, wherein the evaluation apparatus preferably manages reference data for different states of the card reading device, in particular whether there is a card in the receiving space or whether there is no card in the receiving space in order to use different reference data for the comparison on the basis of the state,
wherein the evaluation apparatus preferably receives, depending on events, from the mechatronic transducers, the signal which is excited by some of the mechatronic transducers and is detected by some of the mechatronic transducers,
wherein an event may be one or more of: expiry of a period of time, detection by a sensor that a card has been inserted.

10. Method according to one or more of the preceding method claims, **characterized in that** the piezoelectric elements are operated in the audible sound range, and wherein the piezoelectric elements are fastened to the housing (1) or to components of the card reading device, and the actuators are preferably operated at the natural frequency of the components and/or groups of components or the housing, wherein at least two piezoelectric elements are preferably arranged on the housing (1), and one piezoelectric element is addressed as a sensor and one is addressed as an actuator.

11. Method according to the preceding claim, **characterized in that** at least three piezoelectric elements are arranged on the housing, one piezoelectric element of which is arranged on each of the sides of the housing and serves as a sensor, and one piezoelectric element of which is arranged on the housing and serves as an actuator, and wherein the piezoelectric elements are accordingly excited and evaluated by the evaluation apparatus.

12. Method according to one or more of the preceding claims, **characterized in that** the evaluation apparatus is designed to carry out a pattern recognition on the basis of a calibration.

13. Method according to the preceding claim, **characterized in that** the actuator chooses a sweep from 100 Hz to 5 kHz, which sweep starts at 100 Hz and ends at 5 kHz.

14. Method according to the preceding claim, **characterized in that** the sweep is divided into frequency ranges for the analysis or is excited only at partial frequencies, wherein different pattern recognition methods can be applied to each frequency range,
wherein a feature extraction preferably to the frequency ranges in order to then apply classifiers which determine the state to the extracted features.

## Revendications

1. Dispositif de lecture de carte (20) pour un terminal en libre-service, comprenant un boîtier (1) dans lequel peut être introduite une carte (11) afin d'être lue, comprenant des capteurs et/ou des actionneurs qui comportent des convertisseurs mécatroniques, lesquels sont reliés à un arrangement d'interprétation (4),
les convertisseurs mécatroniques (14) sont disposés dans ou sur le boîtier (1) de telle sorte que l'intégrité du dispositif de lecture de carte (20), notamment du boîtier (1), peut être contrôlée, l'arrangement d'interprétation étant conçu pour recevoir de la part des convertisseurs mécatroniques un signal, qui est produit par excitation d'une partie des convertisseurs mécatroniques et qui est reçu par une partie des convertisseurs mécatroniques, afin de comparer celui-ci avec des données de référence et, dans le cas d'un écart défini, en vue de délivrer un signal d'alerte qui signale une absence d'intégrité du dispositif de lecture de carte ;
les convertisseurs mécatroniques (14) sont des éléments piézoélectriques, qui fonctionnent en tant qu'actionneur ou capteur, de sorte qu'un actionneur peut également faire office de capteur,
**caractérisé en ce**
**que** l'une des deux fonctionnalités des convertisseurs mécatroniques (14) est mise en œuvre en fonction de la commande, l'arrangement d'interprétation déterminant la fonction d'actionneur ou de capteur.

2. Dispositif de lecture de carte (20) selon la revendication 1 précédente, **caractérisé en ce qu'**un espace d'accueil (13) est disposé dans le boîtier (1), dans lequel peut être positionnée la carte (11) introduite afin de lire des données enregistrées sur la carte, les convertisseurs mécatroniques (14) étant configurés et disposés de telle sorte que le contenu de l'espace d'accueil a une influence sur les signaux des convertisseurs mécatroniques.

3. Dispositif de lecture de carte (20) selon une ou plusieurs des revendications précédentes, **caractérisé en ce que** l'arrangement d'interprétation gère des données de référence pour différents états du dispositif de lecture de carte, notamment si une carte se trouve dans l'espace d'accueil ou si aucune carte ne se trouve dans l'espace d'accueil, les données de référence étant de préférence gérées par un classificateur.

4. Dispositif de lecture de carte (20) selon une ou plusieurs des revendications précédentes, **caractérisé en ce que** l'arrangement d'interprétation est configuré pour, en fonction d'événements, recevoir de la part des convertisseurs mécatroniques un signal qui est produit par excitation d'une partie des convertisseurs mécatroniques et qui est détecté par une partie des convertisseurs mécatroniques, l'événement étant de préférence un ou plusieurs des suivants : écoulement d'un intervalle de temps, détection par un capteur qu'une carte a été insérée.

5. Dispositif de lecture de carte (20) selon une ou plusieurs des revendications précédentes, **caractérisé en ce que** les éléments piézoélectriques sont fixés au boîtier (1) et à des composants du dispositif de lecture de carte, et les actionneurs fonctionnent de préférence à la fréquence propre des composants et/ou de groupes de composants ou du boîtier,
de préférence au moins deux éléments piézoélectriques étant disposés sur le boîtier (1), un élément piézoélectrique fonctionnant en tant que capteur et un en tant qu'actionneur, très préférablement 3 éléments piézoélectriques étant utilisés, deux au niveau des côtés du boîtier (1), lesquels servent de capteurs, et un élément piézoélectrique sur le boîtier (1), lequel sert d'actionneur.

6. Dispositif de lecture de carte (20) selon une ou plusieurs des revendications précédentes, **caractérisé en ce que** l'arrangement d'interprétation est configuré pour procéder à une reconnaissance de modèle sur la base d'un étalonnage, l'arrangement d'interprétation excitant de préférence l'actionneur afin d'effectuer un balayage de 100 Hz à 5 kHz, lequel commence à 100 Hz et se termine à 5 kHz, et le balayage pour l'analyse étant de préférence divisé en plages de fréquences ou l'excitation n'ayant lieu que dans des fréquences partielles, des procédés de reconnaissance de modèle différents pouvant être utilisés sur chaque plage de fréquences, une extraction de caractéristique pouvant de préférence être appliquée sur les plages de fréquences afin d'appliquer ensuite sur les caractéristiques extraites des classificateurs qui déterminent l'état.

7. Terminal en libre-service, notamment guichet bancaire automatique, comprenant un dispositif de lecture de carte, **caractérisé en ce que** le dispositif de lecture de carte (20) est configuré selon l'une des revendications 1 à 6.

8. Procédé de surveillance d'un terminal en libre-service, notamment un guichet bancaire automatique, comprenant un dispositif de lecture de carte (20), qui possède un boîtier (1) dans lequel peut être introduite une carte (11) afin d'être lue, comprenant des capteurs et/ou des actionneurs qui comportent des convertisseurs mécatroniques, lesquels sont reliés à un arrangement d'interprétation (4),
les convertisseurs mécatroniques sont disposés dans ou sur le boîtier (1) de telle sorte que l'intégrité du dispositif de lecture de carte (20), notamment du boîtier (1), est contrôlée à l'aide des convertisseurs mécatroniques, l'arrangement d'interprétation recevant de la part des convertisseurs mécatroniques un signal, qui est produit par excitation d'une partie des convertisseurs mécatroniques et qui est détecté par une partie des convertisseurs mécatroniques, afin de comparer celui-ci avec des données de référence et, dans le cas d'un écart défini, en vue de délivrer un signal d'alerte qui signale une absence d'intégrité du dispositif de lecture de carte,
les convertisseurs mécatroniques sont des éléments piézoélectriques, qui fonctionnent en tant qu'actionneur ou capteur, de sorte qu'un actionneur peut également faire office de capteur,
**caractérisé en ce que**
l'une des deux fonctionnalités des convertisseurs mécatroniques est mise en œuvre en fonction de la commande, l'arrangement d'interprétation déterminant la fonction d'actionneur ou de capteur.

9. Procédé selon la revendication précédente, **caractérisé en ce qu'**un espace d'accueil est disposé dans le boîtier (1), dans lequel peut être positionnée la carte (11) introduite afin de lire des données enregistrées sur la carte, les convertisseurs mécatroniques étant configurés et disposés de telle sorte que le contenu de l'espace d'accueil a une influence sur les signaux des convertisseurs mécatroniques, l'arrangement d'interprétation gérant de préférence des données de référence pour différents états du dispositif de lecture de carte, notamment si une carte se trouve dans l'espace d'accueil ou si aucune carte ne se trouve dans l'espace d'accueil, afin d'utiliser des données de référence différentes pour la comparaison en fonction de l'état,
l'arrangement d'interprétation recevant de préférence, de la part des convertisseurs mécatroniques et en fonction d'événements, un signal qui est produit par excitation d'une partie des convertisseurs mécatroniques et qui est détecté par une partie des convertisseurs mécatroniques, l'événement pouvant être un ou plusieurs des suivants : écoulement d'un intervalle de temps, détection par un capteur qu'une carte a été insérée.

10. Procédé selon une ou plusieurs des revendications précédentes, **caractérisé en ce que** les éléments piézoélectriques fonctionnent dans la plage sonore audible, et les éléments piézoélectriques étant fixés au boîtier (1) et à des composants du dispositif de lecture de carte, et les actionneurs fonctionnant de préférence à la fréquence propre des composants et/ou de groupes de composants ou du boîtier, de préférence au moins deux éléments piézoélectriques étant disposés sur le boîtier (1), et un élément piézoélectrique étant sollicité en tant que capteur et un en tant qu'actionneur.

11. Procédé selon la revendication précédente, **caractérisé en ce qu'**au moins trois éléments piézoélectriques sont disposés sur le boîtier, parmi lesquels un élément piézoélectrique est respectivement disposé au niveau des côtés du boîtier, lesquels servent de capteurs, et un élément piézoélectrique sur le boîtier, lequel sert d'actionneur, et les éléments piézoélectriques sont excités et interprétés en conséquence par l'arrangement d'interprétation.

12. Procédé selon une ou plusieurs des revendications précédentes, **caractérisé en ce que** l'arrangement d'interprétation est configuré pour procéder à une reconnaissance de modèle sur la base d'un étalonnage.

13. Procédé selon la revendication précédente, **caractérisé en ce que** l'actionneur sélectionne un balayage de 100 Hz à 5 kHz, lequel commence à 100 Hz et se termine à 5 kHz.

14. Procédé selon la revendication précédente, **caractérisé en ce que** le balayage pour l'analyse est divisé en plages de fréquences ou l'excitation n'a lieu que dans des fréquences partielles, des procédés de reconnaissance de modèle différents pouvant être utilisés sur chaque plage de fréquences,
une extraction de caractéristique de préférence sur les plages de fréquences, afin d'appliquer ensuite sur les caractéristiques extraites des classificateurs qui déterminent l'état.
